# EUROPEAN PATENT APPLICATION

(11) **EP 3 647 643 A1**
(43) Date of publication of application: **06.05.2020**
(21) Application number: 18203593.1
(22) Date of filing: 31.10.2018
(51) Int. Cl.: F16L 5/04

(54) **FIRE PROTECTION DEVICE AND TUBULAR OBJECT COMPRISING A FIRE PROTECTION DEVICE**

(71) Applicant: Hilti Aktiengesellschaft, 9494 Schaan (LI)
(72) Inventor: Terver, William, 6800 Feldkirch (AT)
(74) Representative: Hilti Aktiengesellschaft Corporate Intellectual Property

(57) **Abstract**

A fire protection device (16) for sealing a penetration in a wall (10) is provided, comprising an elongated tube (18) being configured to be fixed on a tubular object (12) penetrating the wall (10), and a sealing portion (20), the sealing portion (20) comprising a central opening (28) in alignment with the tube (18) and a sealing material (30), wherein the sealing portion (20) is fixed to the tube (18) at a predetermined position. Furthermore, a tubular object (12) comprising such a fire protection device (16) is provided.

## Description

The invention refers to a fire protection device and a tubular object comprising a fire protection device.

Fire protection devices are used for sealing openings or penetrations in walls or ceilings, in particular openings for cable ducts, to prevent the spread of fire and smoke in buildings. Such fire protection devices are for example a permanently plastic modelling compound for fire protection applications, a firestop sealant, a firestop foam or a cable disc. Since the said materials are at least partially flexible they can be shaped freely to create a tight seal between a tubular object and a wall.

Modelling compounds or cable discs are highly flexible and relatively easy to install, but the materials do not offer an attractive finish after application. Moreover, the materials are vulnerable to dust and humidity.

For use of firestop sealants or foams, special tooling is required for applying the material correctly and for achieving a satisfactory finish. Accordingly, the application of such materials requires a lot of time and can also lead to significant waste of material, since these materials are difficult to measure off.

Therefore, it is an object of the present invention to provide a fire stop device which has sufficient fire protection properties, is easy to install and offers a satisfactory finish.

The invention provides a fire protection device for sealing a penetration in a wall, comprising an elongated tube being configured to be fixed on a tubular object penetrating the wall and a sealing portion fixed to the tube, the sealing portion comprising a central opening in alignment with the tube and sealing material, wherein the sealing portion is fixed to the tube at a predetermined position. The tubular object is for example a cable or a pipe, in particular a non-burning cable or pipe. Furthermore, the tubular object may be either stiff or flexible.

The sealing portion may be fixed on the tube in a position such that it directly abuts a wall surrounding an opening to be sealed. Accordingly, a tight seal against air and smoke can be achieved. Furthermore, the elongated tube can be easily placed on a tubular object, whereby the fire protection device is easy to install. Besides, the elongated tube provides additional support for the tubular object, i.e. structural stability is added to non-supported tubular objects penetrating a wall. In other words, the tube prevents the tubular object from bending at least over the length of the tube.

The sealing portion is fixed the tube for example in such a manner that no airflow is allowed between the tube and the sealing portion in order to reliably prevent the spread of heat and smoke when the fire protection device is installed in a building as intended. For example, the sealing portion and the tube may be manufactured integrally.

The sealing portion may be disc shaped and therefore provide a satisfactory finish of the sealing.

In an alternative embodiment, the sealing portion may be disc shaped and have to ability to be opened in half in order to be easily mounted and dismounted from the tubular object, allowing for increased ease of installation and maintenance flexibility.

According to an embodiment, the sealing portion comprises a support, in particular a support ring, wherein the support is provided with the opening. Due to the support, the sealing portion has an adequate stability and the fire protection device can be handled easily during installation of the fire protection device. Furthermore, the connection between tube and sealing portion may be stable due to the support. In particular, the support is permanently connected to the tube.

The sealing material, being for example a deformable material, may be fixed to the support. In other words, the sealing material is supported by the support and thereby kept in a desired shape. In particular, the support prevents an adverse deformation of the sealing material during installation of the fire protection device.

According to a further embodiment, it is possible that the support is provided by the sealing material. Thus, the fire protection device may be particularly cost-effective. However, this requires a certain dimensional stability of the sealing material, hence not all known sealing materials are suitable for this solution.

The sealing portion may be fixed to the tube by form-fit or by connecting techniques such as welding or similar. Such form-fitting or force-fitting connections provide a tight seal that prevents an airflow between the tube and the sealing portion.

Preferably, the sealing portion comprises a wall, in particular a cylindrical wall, having a greater diameter than the diameter of the tube and a sealing section located radially between the wall and the diameter of the tube, wherein the sealing material is placed in the sealing section. Thereby, sealing material can be easily portioned by filling the sealing section with sealing material. In particular, when the sealing section is filled flush with sealing material, i.e. no sealing material protrudes beyond the cylindrical wall in axial direction of the fire protection device, an adequate amount of sealing material is provided. Thus, no calculations of the volume of sealing material are required.

The wall may be coaxial with the tube, such that a penetration of a wall can be sealed consistently around its circumference.

Furthermore, the wall is preferably perpendicular to the tube. Thereby, a tubular object extending through the fire protection device, in particular through the tube, protrudes perpendicularly from a wall.

An axial thickness of the sealing material may correspond to an axial length of the cylindrical wall. Thereby, the sealing material may abut a wall comprising the opening to be sealed and a reliable sealing may be achieved.

The tube, the wall, the sleeve and/or the support may consist of metal and/or are formed as a single piece. Due to the use of metal, the elements mentioned above may be dimensionally stable even at high temperatures. Thereby, the sealing material may be held in position adjacent to an opening to be sealed. For example, the metal is copper, brass or aluminium. Furthermore, the fire protection device can be handled easily when the respective elements are formed as a single piece.

For fixing the tube on a tubular object, the tube can be deformable at least in a clamping section in order to clamp the tube on the tubular object. The clamping may be easily achieved with a suitable press tool. The sealing material may be ring-shaped so that the fire protection device may be suited for effectively sealing circular wall openings for cables or pipes with circular cross sections.

According to one embodiment, an axial thickness of the ring of sealing material corresponds to an axial length of the cylindrical segment and the cylindrical segment surrounds the sealing material in radial direction. With this design, the sealing material can, for example, be portioned and preformed in a mould and then inserted into the sealing section.

Preferably, the sealing portion is located at an axial end of the tube. This allows the sealing portion to entirely abut a wall.

According to one embodiment, the tube does not extend into the sealing portion. That means that the tube and the cylindrical wall do not overlap. For example, the tube and the wall are connected by a perpendicular, disk shaped wall. Thus, the tube and the cylindrical wall may be formed as a single piece. However, the tube and the cylindrical wall can also be connected by welding a disc shaped wall to the tube and the cylindrical wall respectively.

In an alternative embodiment, the tube may extend into the sealing portion, i.e. through the sealing portion, and ends flush with the axial end of the cylindrical wall facing away from the tube. In this embodiment, the support may sit on the tube in a way such that the sealing portion is fixed to the tube. For example, the support may be welded to the tube.

Preferably, an axial length of the tube is longer than an axial length of the sealing portion, for example at least four times longer. Due to the axial length of the tube, a support section on the tubular object is provided for the sealing portion. This is advantageous especially for flexible cables or pipes, since the tube provides a straight section for mounting the sealing portion. Thereby, the sealing portion is arranged essentially perpendicular to the tubular object.

A diameter of the sealing portion is for example several times larger than a diameter of the tube, for example at least three times larger. Due to the diameter of the sealing portion being larger than the diameter of the tube, penetrations in walls can be covered by the sealing portion.

The sealing material is preferably an intumescent material. Intumescent materials expand at high temperatures, thereby closing a penetration in a wall by advancing into the penetration and offering a tight seal against air and smoke when the fire protection device is installed properly.

The invention further provides a tubular object, in particular a cable or a pipe comprising a fire protection device as described precedingly, wherein the tube is fixed to the tubular object, in particular clamped on the tubular object.

The fire protection device when fixed to the pipe, but not to the wall, provides for an excellent application within the seismic building construction area.

Further features and advantages of the invention will become apparent from the following description and from the accompanying drawings to which reference is made. In the drawings:
- Figure 1 shows a fire protection device according to the invention during installation at a wall,
- Figure 2 shows the installation of an additional fire protection device according to the invention at a wall,
- Figure 3 shows a side view of the fire protection device according to the invention,
- Figure 4 shows a front view of the fire protection device of Figure 3,
- Figure 5 shows the installation of a fire protection device on a tubular object,
- Figure 6 shows different embodiments of fire protection devices according to the invention, and
- Figure 7 visualises the function of the fire protection device.

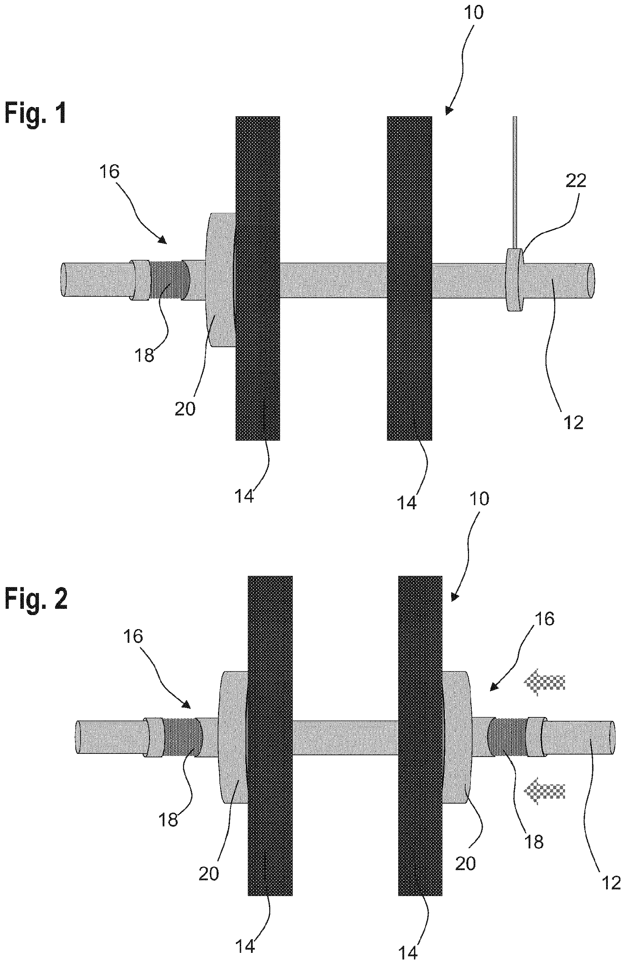

Figure 1 shows a wall 10, for example an inner wall of a building, and a tubular object 12 penetrating the wall 10. The tubular object 12 is for example a non-burning cable or pipe.

The wall 10 itself may be solid or, as shown in Figures 1 and 2, comprise two separate plates 14.

For installation of the tubular object 12, an opening has to be provided in the wall 10. In case of need, in particular in order to provide proper fire protection, the opening has to be tightly sealed such that air, smoke and/or heat are prevented from circulating through the wall 10 in order to prevent that smoke spreads rapidly.

For this purpose, a fire protection device 16 according to the invention is installed on the tubular object 12 in a fixed position, which is configured to seal a penetration in the wall 10.

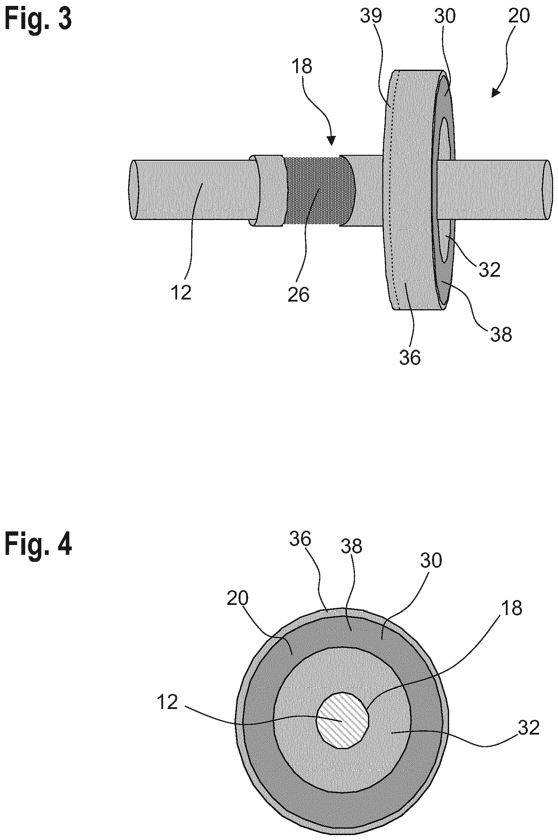

As shown in Figures 3 and 4, the fire protection device 16 comprises an elongated tube 18 and a sealing portion 20 which is preferably disc shaped. The tube 18 is fixed on the tubular object 12 penetrating the wall 10.

Figure 3 shows the fire protection device 16 installed on the tubular object 12 in a detailed view.

In this depiction, the different sections of the fire protection device 16, i. e. the tube 18 and the sealing portion 20, are illustrated clearly.

The sealing portion 20 is fixed to the tube 18 in a predetermined position, in particular at an axial end of the tube 18. The sealing portion 20 cannot be disengaged from the tube non-destructively.

The tube 18 comprises a clamping section 26 in which the tube 18 is deformable order to clamp the tube 18 on a cable or a pipe as shown in Figure 3.

The axial length of the tube 18 is longer than the axial length of the sealing portion 20, for example at least four times longer.

Further, the diameter of the sealing portion 20 is several times larger than the diameter of the tube 18, for example at least three times larger, as can be seen in Figure 4. Figure 4 shows a front view of the fire protection device 16 of Figure 3.

The sealing portion 20 comprises a support 32 with a central opening 28 in alignment with the tube 18, a sealing material 32 and a wall 36. The support 32 is fixed to the tube 18 for example by welding. In order to provide a sufficient sealing function, the sealing material 30 is, for example, an intumescent material.

The support 32 particularly supports the sealing material 30 and holds the sealing material 30 in a defined position.

The tube 18, wall 36 and the support 32 may be formed as a single piece. This is advantageous with regard to the handling of the sealing portion 20. In particular, it is avoided that the sealing portion 20 is unintentionally deformed during mounting the sealing portion 20 on the tube 18 or during mounting the fire protection device 16 on the tubular object 12.

In an alternative embodiment which is not visualized in the Figures, the support is provided by the sealing material 30.

In the shown embodiment, the wall 36 is a cylindrical wall. The diameter of the wall 36 is greater than the diameter of the tube 18, in particular greater than the diameter of the support 32.

Thereby, the wall 36 restricts a sealing section 38, which is located radially between the wall 36 and the tube 18, in particular between the wall 36 and the support 32. That means the cylindrical wall surrounds the sealing material 30 in radial direction.

In the sealing section 38, sealing material 30 is located. Since the sealing section 38 is a defined space, the sealing material 30 can be easily filled in the sealing section 38 when producing the fire protection device 16. When the sealing section 38 is filled up to the rim, the right amount of sealing material 30 is provided for sealing an opening in a wall 10 sufficiently.

In the depicted embodiments, the sealing material 30 is ring-shaped. For example, the sealing material 30 is preformed in ring-shape and inserted in the sealing section 38. An axial thickness of the ring of sealing material 30 corresponds to an axial length of the cylindrical wall 36.

Alternatively, the sealing material 30 is provided as a deformable material or a paste which is filled in the sealing section 38.

The tube 18, the wall 36, the sleeve 34 and/or the support 32 consist of metal, for example of copper, brass or aluminium.

For example, the support 32 and the wall 36, may be connected by means of a radially extending disc 39, which has a small wall thickness compared to the axial length of the cylindrical wall 36. For example, the disc 39 has a thickness of 1 mm or less. The disc 39 is illustrated by a dotted line in Figure 3.

Due to the disc 39, the sealing material 30 is confined in the sealing section 38 and kept near to the wall 10. In other words, in case of a temperature rise when the sealing material 30 expands, it is ensured that the sealing material 30 expands in a direction towards the wall 10 and not away from the wall 10. In the installation situation visualized in Figure 1, the tubular object 12 is supported by means of a support system 22 on one side of the wall 10.

The support system 22 secures the tubular object 12 against axial displacement, thereby enabling a tight abutment of the fire protection device 16 against the wall 10. The tight abutment is essential for a sufficient sealing of an opening in the wall 10. Due to the support system 22, only one fire protection device 10 is needed in the installation situation of Figure 1.

In the installation situation visualized in Figure 2, a fire protection device 16 is provided on both sides of the wall 10. Since the fire protection devices 16, in particular the tubes 18 are in a fixed position on the respective tubular object 12, a tight sealing can be achieved by using two fire protection elements 16 without using a separate support 22.

Each of the fire protection devices 16 is brought into tight abutment with the wall 10 such that the tubular object 12 is tensed between the fire protection devices 16, i.e. the tubular object 12 does not sag in the area between the outside surfaces of the wall 10.

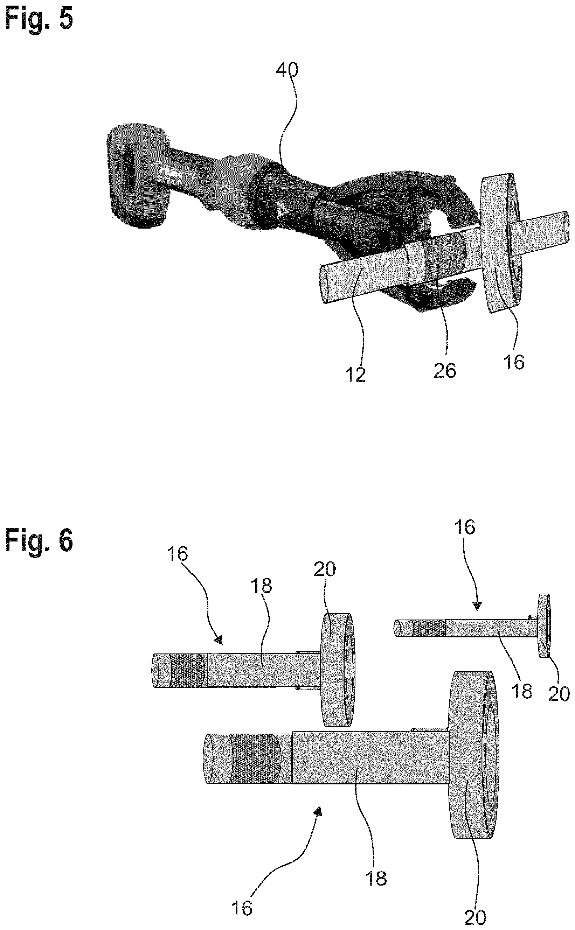

Figure 5 shows how the tube 18 is fixed on a tubular object 12 by means of a tool 40. By actuating the tool 40, the clamping section 26 is deformed such that the tube 18 is pressed tightly against the tubular object 12, in particular such that the tube 18 is fixed on the tubular object 12 in a fixed axial position. Thus, after deforming the clamping section 26 properly with the tool 40, the tube 18 cannot be moved in an axial direction along the tubular object 12 anymore. In particular, the tube 18 cannot be detached non-destructively.

Figure 6 shows several fire protection devices 16 of different sizes. The ratio of the diameter of the tube 18 and the diameter of the sealing portion 20 may vary for different sizes. Also, the ratio of the axial length of the tube 18 and the axial length of the sealing portion 20 may vary for different sizes.

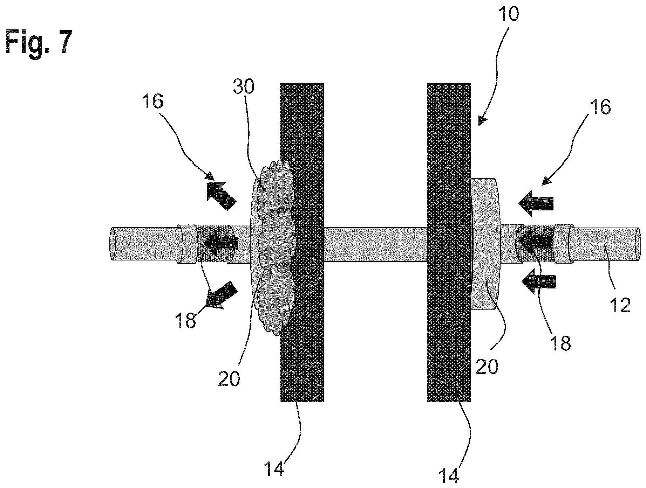

Figure 7 illustrates the function of the fire protection device 16 in case of a severe temperature rise on one side of the wall 10, for example when a fire occurs. In such a case, the sealing material 30, in particular the intumescent material, expands and thereby fills up the penetration in the wall 10.

Furthermore, due to the expansion of the sealing material 30 on one side of the wall 10, the fire protection device 16 on the opposite side of the wall 10 is drawn against the wall 10 even more tightly (indicated by arrows), sealing the penetration in the wall 10 particularly reliably.

## Claims

1. Fire protection device (16) for sealing a penetration in a wall (10), comprising an elongated tube (18) being configured to be fixed on a tubular object (12) penetrating the wall (10), and a sealing portion (20), the sealing portion (20) comprising a central opening (28) in alignment with the tube (18) and a sealing material (30), wherein the sealing portion (20) is fixed to the tube (18) at a predetermined position.

2. Fire protection device (16) according to claim 1, wherein the sealing portion (20) comprises a support (32), in particular a support ring, wherein the support (32) is provided with the opening (28).

3. Fire protection device (16) according to claim 2, wherein the support (32) is provided by the sealing material (30).

4. Fire protection device (16) according to any of the preceding claims, wherein the sealing portion (20) comprises a wall (36), in particular a cylindrical wall having a greater diameter than the diameter of the tube (18) and a sealing section (38) located radially between the wall (36) and the diameter of the tube (18), wherein the sealing material (30) is placed in the sealing section (38).

5. Fire protection device (16) according to claim 4, wherein an axial thickness of the sealing material (30) corresponds to an axial length of the wall (36).

6. Fire protection device (16) according to any of the preceding claims, wherein the tube (18), the wall and/or the support (32) consist of metal and/or are formed as a single piece.

7. Fire protection device (16) according to any of the preceding claims, wherein the tube (18) is deformable at least in a clamping section (26) in order to clamp the tube (18) on the tubular object (12).

8. Fire protection device (16) according to any of the preceding claims, wherein the sealing material (30) is ring-shaped.

9. Fire protection device (16) according to any of the preceding claims, wherein the sealing portion (20) is located at an axial end of the tube (18).

10. Fire protection device (16) according to any of the preceding claims, wherein an axial length of the tube (18) is longer than an axial length of the sealing portion (20), for example at least four times longer.

11. Fire protection device (16) according to any of the preceding claims, wherein a diameter of the sealing portion (20) is larger than a diameter of the tube (18), for example at least three times larger.

12. Fire protection device (16) according to any of the preceding claims, wherein the sealing material (30) is an intumescent material.

13. Tubular object (12), in particular a cable or a pipe comprising a fire protection device (16) according to any one of the preceding claims, wherein the tube (18) is fixed to the tubular object (12), in particular clamped on the tubular object (12).
